# EUROPEAN PATENT SPECIFICATION

(11) **EP 1 383 625 B1**
(45) Date of publication and mention of the grant of the patent: **08.09.2010**
(21) Application number: 02799717.0
(22) Date of filing: 02.05.2002
(51) Int. Cl.: B23K 1/00, B21C 37/08

(54) **A PROCESS OF MAKING A SHAPED PRODUCT**
VERFAHREN ZUR HERSTELLUNG EINES FORMKÖRPERS
PROCEDE DE FABRICATION D'UN PRODUIT MODELE

(30) Priority: 02.05.2001 WO PCT/EP01/04981
(43) Date of publication of application: 28.01.2004
(73) Proprietor: NORSK HYDRO ASA, 0240 Oslo (NO)
(72) Inventor: MORLEY, Ed, DK-6520 Toftlund (DK); TAYLOR, James, Steven, Lancashire OL11 5JE (GB)
(74) Representative: Bleukx, Lucas Lodewijk M.
(86) International application number: PCT/EP2002/004948
(87) International publication number: WO 2003/037559

(56) References cited:
- EP-A- 0 115 441
- US-A- 3 145 842
- US-A- 3 546 916
- US-A- 4 790 623

## Description

The invention relates to a process of making a shaped product consisting of aluminium or an aluminium alloy, comprising the steps of producing an intermediate object by extrusion or rolling and reshaping the intermediate object into the shaped product.

Such a process is generally known and is used for producing different types of tubing such as wrapped tubes, folded tubes or so-called welded tubes.

For a number of such shaped products it is required to interconnect different portions of the shaped product in order to obtain a sealed construction, such as e.g. required for tubing, or to obtain the required strength such as e.g. required in folded tubes. This is commonly done by brazing. If such connection is required it becomes necessary to at least provide the surface of one portion to be brazed with a flux coating.

US 4,790,623 discloses manufacture of tubes in copper alloys whereby a metal strip is formed into a circular profile by drawing through a forming die and then through a sizing die which imparts residual stresses such that the edges of the strip are held in close proximity without the need for clamping. Before forming of the strip, the edges of the strip are coated with a flux material which will enable these edges can be soldered together in a separate soldering operation where filler material is provided.

All known flux coatings, however, have the disadvantage that they have to be applied after the reshaping of the intermediate object into the shaped product. These known flux coatings are generally brittle and/or lack the adherence to the aluminium surface to withstand the deformation forces while reshaping the intermediate object. Therefore the common flux coating will partly spring off from the aluminium surface while reshaping, and this especially in these areas where deformation occurs.

It is therefore an object of the invention to provide a process which makes it possible to apply the flux coating before deformation/bending of the intermediate object takes place. This object is obtained by means of a process as described in claim 1.

In this way it becomes possible to apply the flux coating by means of a simple coating process, which is technically simple compared with the known application techniques, and which can easily be adapted to such an extend as that the coating is only applied to the positions needed for the brazing.

The type of brazing flux is not a limiting factor in this process, as any type of flux coating as described in the claims 2 - 4 can be used.

The invention is also not restricted to one type of product, but different types of products can be made, such as described in the claims 6 - 9.

Further characteristics and advantages of the invention will become clear from the following description, references being made to the annexed drawings in which :
- Fig. 1: is a schematic cross-sectional view of a tube made in accordance with the invention,
- Fig. 2: is a schematic cross-sectional view of a modified embodiment of a tube made in accordance with the invention,
- Fig. 3: is a schematic cross-sectional view of a third embodiment of a tube made in accordance with the invention,
- Fig. 4: is a schematic cross-sectional view of a so-called folded tube with multiple ports, made in accordance with the invention,
- Fig. 5: is a schematic cross-sectional view of a modified embodiment of a folded tube,
- Fig. 6: is a schematic cross-sectional view of a third embodiment of a folded tube,
- Fig. 7: is a schematic cross-sectional view of a so-called welded tube produced in accordance with the invention,

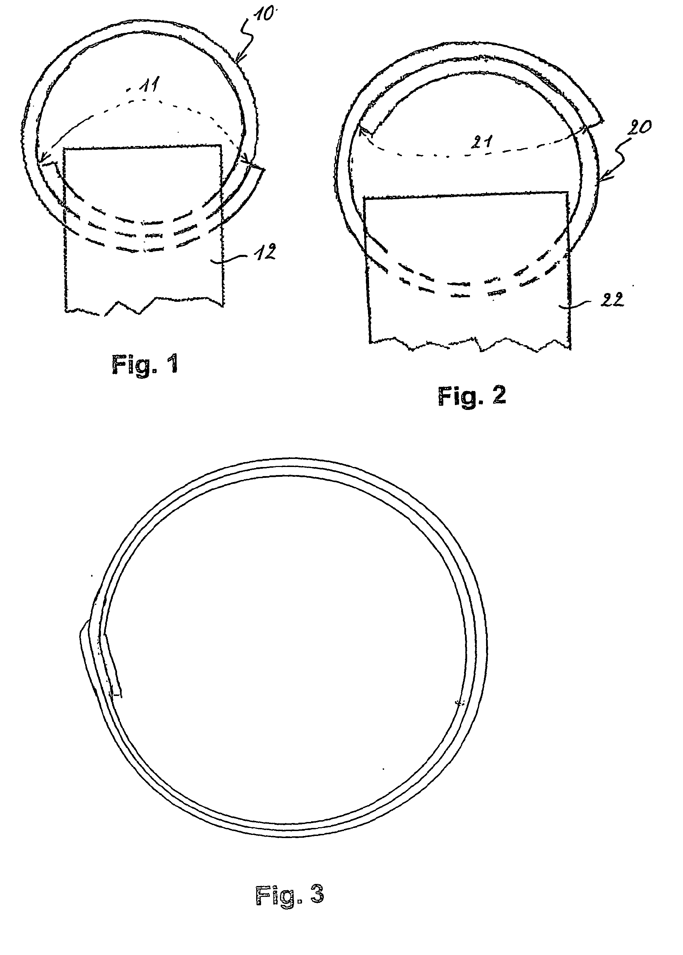

In fig. 1 there is shown a so-called wrapped tube 10. This wrapped tube 10 has been obtained by producing a flat shaped object by e.g. rolling, and subsequently bending this flat object so as to obtain a substantially cylindrical shape with overlapping side portions 11. According to the invention at least one part of the overlapping side portions 11 has been coated with a brazing flux containing coating while the object is in its flat shape, so that the coating can be applied in a very simple way by means of conventional coating systems, such as e.g. described in PCT/EP99/09162. In case the wrapped tube is intended to be used as a header tube or manifold in a heat exchanger it is possible to provide the side portions of the flat shaped object with recesses or cutouts, which after shaping into a wrapped tube form holes for the end portions of heat exchanging tubes 12. Also for this purpose the outer wall portion of the zone 11 may be coated before bending with a brazing flux retaining coating. When subsequently the obtained tube 10 and if present the inserted heat exchanging tubes 12 are placed in a brazing oven, or the like, no additional flux application is required and a brazed connection between the overlapping side portions 11 and between the tubes 10 and 12 is directly obtained because of the presence of the braze flux containing coating.

In fig. 2 there is also shown a wrapped tube 20 corresponding substantially to the wrapped tube 10 shown in fig. 1 and having overlapping side portions 21, which can be provided with a brazing flux retaining coating, so as to make brazing possible. In the embodiment shown in

fig. 2 the central part of the flat sheet forming the intermediate object is provided with a number of holes or piercings, which holes can accommodate end portions of heat exchanging tubes 22 after shaping the final product in this case a header tube 20 or manifold. At least the central portion of the flat sheet is also provided before deformation with a brazing flux retaining coating so that after shaping the manifold 20 and inserting the tubes 22, the brazing connection between the manifold 20 and the tubes can be made directly by heating without any further process step.

In fig. 3 there is shown a third embodiment of a wrapped tube obtainable by means of the process according to the invention. This type of tube may be especially useful in high pressure applications such as brake lines or hydraulic applications. The intermediate object is a flat sheet which at least at one side is provided with a braze flux retaining coating. Subsequently the flat sheet is wrapped to a cylindrical tube whereby a number of layers are formed so that the wall of the tube is thicker than the thickness of the flat sheet. Preferably two or more layers are formed, dependent upon the application of the final product. In a last step the wrapped tube is heated to a temperature above the required braze temperature, which is dependent upon the flux used whereby as a result of the presence of the flux retaining coating between the layers of the wrapped tube a firm connection between the successive layers can be obtained.

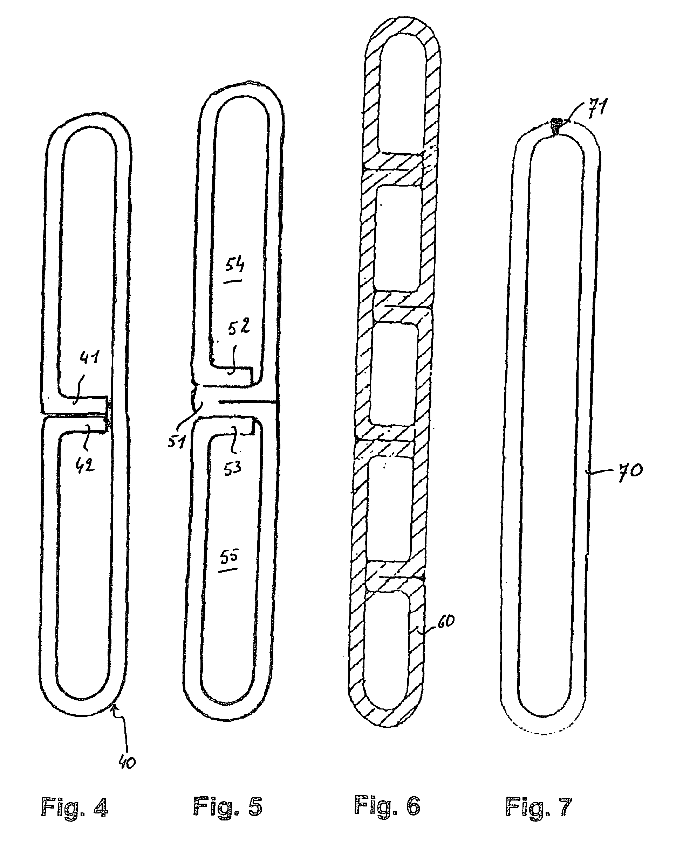

In the figs. 4, 5 and 6 there are shown different embodiments of so-called folded multiple part flat tubes. The intermediate objects for each of these tubes 40, 50 or 60 is a flat sheet of rectangular shape. After coating at least one side of the sheet with a brazing flux retaining coating the sheet is folded into the desired shape and subsequently heated in order to obtain the required brazed connections.

In fig. 4 there must be provided at least a coating on the outer side of the tube 40, so as to enable end portions 41 and 42 to be connected and sealed by the brazing process. The embodiment of fig. 5 requires a brazing flux retaining coating on both sides of the tube, but it may be limited to these portions where actual brazing is required. In this case this is the portion with the gusset fold 51 and the two end portions 52 and 53. In this way a sealing connection can be obtained between the gusset fold portion 51 and the end portions 52 and 53, so as to obtain two separate channels 54 and 55. Moreover, the strength of the tube can be improved by having the two halves of the gusset fold 51 brazed together.

In fig. 6 there is shown how in the same way starting from a flat sheet coated with a brazing flux retaining coating according to the invention a multiple port flat tube can be obtained by using gusset folds and brazing together of the relevant positions. In this way a tube 60 with five channels can be obtained, but it will be obvious that any other configuration can be obtained.

In fig. 7 there is shown a so-called welded tube 70 i.e. a tube which has been obtained by shaping two half-tubes, e.g. by extrusion, which on one end portion may be connected to each other. After reshaping a flat tube is obtained by welding together the two halves along a seam 71. The intermediate object may be the half-tube flat outer side wall of which may be provided with a brazing flux retaining coating, or the final welded tubes which on both flat sides may be provided with a brazing flux retaining coating. The end result is the same and the coating makes it possible to make a brazed connection between the tubes 70 and e.g. finstock. The process according to the invention even makes it possible to shape the tube in a serpentine way before the brazing but after the coating and to have the finstock then brazed to the tube.

As a coating use can be made either of what is called hereinafter a prebraze coating, i.e. a coating containing a flux or flux-producing compound and a brazing alloy or a composition producing a brazing alloy upon heating, or what is called hereinafter a preflux coating i.e. a coating containing only a flux or a flux producing compound, in which latter case the brazing alloy will be obtained either by using a clad Al-material, i.e. having a top-layer of an brazing alloy, the coating being provided on top of that clad material, or the coated Al-product is used in combination with a clad Al-material.

Examples of prebraze coatings are the so-called reactive fluxes as e.g. described in WO-A-01 38040, such a fluxes based upon K₂SiF₆. The coating may contain either 0-100 % by weight of K₂SiF₆, or 0-100 % by weight of KZnF₃ and/or 0-50 % by weight of potassium fluoroaluminate. This type of coating can be applied to unclad aluminium material, whereupon the Si originating from the K₂SiF₆ provides the filler material and K, F and Al forms potassium fluoroaluminates which acts as the flux. This type of coating is especially suitable for fin to tube joints, but can be used in applications according to the invention.

Another type of prebraze coating is based upon a flux as is e.g. known as Nocolok Sil^{®} which is a flux containing Si-particles. The Si-particles will provide the filler material and the Nocolok-flux will act in the conventional way. Also this type of coating can be used with unclad Al-material.

A third type of prebraze coating can consist of a flux based upon potassium fluoroaluminate such as Nocolok^{®} combined with powder of an Al-Si-alloy such as e.g. AA4047, AA4045 and the like. The Al-Si-particles will provide the filler material and the flux will act in the conventional way. Also this type of coating will be used together with unclad Al-material.

As examples for a preflux coating the following compositions can be named.

The combination of Nocolok^{®} with ordinary fluxes such as potassium-fluoro-aluminates. This type of coating must either be applied to a clad Al-material or be used together with another Al-product provided with a brazing clad.

Other flux types which e.g. can be used according to the invention as so-called preflux coatings are the following:
Potassium fluoroaluminates such as potassium tetrafluoroaluminate (KAF₄), Potassium pentafluoroaluminate (K₂AlF₅, K₂AlFₛ □H₂O) and potassium hexafluoroaluminate (K₃AlF₆). Eamples of such fluxes have been described in GB-A 1,438,955, US-A 4,428,920, US-A-3,951,328, US-A 5,318,764 and US-A 4,579,605.
Oxyfluoroaluminum such as Al₂F40 and AIFO
Hydroxyfluoroaluminium such as AlF₂(OH), AlF₂(OH)□H₂O and AlF(OH)₂
Fluoroborates such as potassium tetrafluoroborate (KBF₄) and sodium tetrafluoroborate (NaBF₄). Examples of such fluxes haven been described in GB-A 899,171, GB-A 1,007,039 and US-A-4,235,649.
Fluorozincates such as potassium trifluorozincate (KZnF₃), potassium tetrafluorozincate (K₂ZnF₄) caesium trifluorozincate (CsZnF₃) and caesium tetrafluorozincate (Cs₂ZnF₄). Examples of such fluxes haven been described in DE-A-19,913,111 and WO-A-99,48641.
Alkali metal fluorosilicates such as caesium hexafluorosilicate (Cs₂SiF₆), potassium hexafluorosilicate (K₂SiF₆), lithium hexafluorosilicate (Li₂SiF₆), rubidium hexafluorosilicate (Rb₂SiF₆), sodium hexafluorosilicate (Na₂SiF₆) and ammonium hexafluorosilicate ((NH₄)₂SiF₆). Examples of such fluxes haven been desribed in US-A-5,785,770, DE-A-19,636,897, US-A-5,985,233, US-A-6,019,856, US-A- 5,980,650 and WO-A-98,10887.
Alkali bimetal fluorosilicates such as potassium caesium hexafluorosilicate (KCsSiF₆), lithium caesium hexafluorosilicate (Licssif₆), rubidium caesium hexafluorosilicate (RbCsSiF₆), rubidium potassium hexafluorosilicate (RbKSiF₆) and ammonium caesium hexafluorosilicate (NH4CsSiF₆).
Alkali metal bifluorosilicates (also referred to as alkali metal hydrofluorosilicates) such as caesium hydrofluorosilicate (CsHSiF₆), potassium hydrofluorosilicate (KHSiF₆), lithium hydrofluorosilicate (LiHSiF₆) and ammonium hydrofluorosilicate (NH4HSiF₆).
Caesiumfluoroaluminate complexes such as caesium fluoride (CsF), caesium hexafluflroaluminate (Cs₃AlF₆), caesium tetrafluoroaluminate (CsAlF₄, CsAlF₄□H₂O) and caesium pentafluoroaluminate (Cs₂AlF₅, Cs₂AlF₆□7H₂O). Examples of such fluxes haven been desribed in US-A-4,670,067, US-A- 5,171,377 (both caesium fluoroaluminates and caesium fluorides), US-A-5,806,752 (Casium fluoride), US-A- 5,771,962 (Casium fluoride) and US-A- 4,655,385(both caesium fluoroaluminates and caesium fluorldes).

Otherwise so-called superfluid fluxes can be used as well.

As for the synthetic resins to be used in the present invention, those mainly comprising a homopolymer of a methacrylate or a copolymer of two or more methacrylates are preferred. Given as specific examples of such a methacrylic acid ester are methyl methacrylate, ethyl methacrylate, propyl methacrylate, 2-methylpromyl methacrylate, n-butyl methacrylate, t-butyl methacrylate, 2-etylhexyl methacrylate, octyl methacrylate-isodecyl methacrylate, lauryl methacrylate, tridecyl methacrylate, stearyl methacrylate, cyclohexyl methacrylate, benzyl methacrylate, diathylaminoethyl methacrylate, 2-hydroxyethyl methacrylate, dimethylaminoethyl methacrylate, t-butylaminoethyl methacrylate, glycidyl methacrylate, metaterahydrofurfuryl methacrylate, and the like.

The coating can be applied by different techniques, such as by means of a roll coating technique, whereupon the applied coating is heated and dried to evaporate the organic solvent in the mixed flux composition. Roll-transfer printing can also be used as an application method but roll coating is preferred since it offers superior control of the quality of the deposited layer.

Preferably the synthetic resin has a compositon which volatilizes in the range of 200-400°C, preferably below 350°C.

In this way a coating is obtained the binder of which will evaporate at the temperatures normally used in the brazing process, so that the binder cannot negatively influence the characteristics of the obtained brazing joint.

In a most preferred embodiment the synthetic resin comprises at least 10 % by weight of a resin commercially available as Polaroid B 48 of Rohm & Haas.

It has been found that this resin fulfils all requirements for a satisfying flux coating, especially with respect to ease of use while applying the coating. Moreover no hazardous or dangerous fumes are generated during the brazing process, and no negative influences have been found with respect to the environment.

Satisfactory results have been obtained when the weight ratio of the flux powders to the synthetic resin comprised within the flux compositions lies in the range from 9:1 to 1:2, preferably 9:1 to 3:2, and when the flux coating has been applied in quantities form 2-20 g/m2, preferably 5-20 g/m2.

When the weight ratio of the reactive flux exceeds 9, adhesion of the composition to the aluminium material becomes insufficient and the coating tends to cause flaking, whereas at less than 3:2 the excessive proportion synthetic resin can harm the brazing atmosphere which alter braze characteristics and raise the cost.

It is obvious that the invention is not restricted to the above described embodiment but that numerous modifications can be applied without departing from the scope of the annexed claims.

## Claims

1. A process of making a shaped product consisting of aluminium or an aluminium alloy comprising the steps of:
- producing an intermediate object by extrusion or rolling and having at least one flat surface,
- coating the at least one flat surface with a flux retaining coating which is comprising flux particles and a binder containing at least 10 % by weight of a synthetic resin based, as its main constituent, on methacrylate homopolymer or a methacrylate copolymer,
- where the flux retaining coating is either;
a prebraze coating containing a flux or flux producing compound and a brazing alloy or a composition producing a brazing alloy upon heating, or;
a preflux coating that contains only a flux or a flux producing component provided on top of a clad material that contains a brazing alloy, or the preflux coating as above where the coated aluminium product is used in combination with a clad aluminium material,
- reshaping of the intermediate object into the shaped product, and
- heating the shaped product to a temperature sufficient to provide at least one brazed connection between defined parts of the shaped products.

2. A process according to claim 1, **characterized in that** the weight ratio of the flux to the synthetic resin in the flux composition is in the range from 9:1 to 3:2.

3. A process according to any one of the claims 1-2, **characterized in that** the amount of reactive flux is selected in such a way that the amount of free Si, Zn or Zn + Si on the coated surface is within the range 1 to 7 g/m².

4. A process according to claim 1, **characterized in that** the flux is based upon a fluoraluminate-compound.

5. A process according to any one of the claims 1- 4, **characterized in that** the reshaping at least involves a bending operation of at least one part of the flat surface of the intermediate product.

6. A process according to any one of the claims 1 - 5, **characterized in that** the product is a folded tube.

7. A process according to any one of the claims 1 - 5, **characterized in that** the product is a welded tube.

8. A process according to any one of the claims 1 - 5, **characterized in that** the product is a wrapped tube.

9. A process according to claim 8, **characterized in that** the product is a manifold tube.

## Patentansprüche

1. Verfahren zum Herstellen eines geformten Produkts, das aus Aluminium oder einer Aluminiumlegierung besteht, umfassend die folgenden Schritte:
- Herstellen eines Zwischenobjekts durch Extrusion oder Walzen, das mindestens eine flache Oberfläche aufweist,
- Beschichten der mindestens einen flachen Oberfläche mit einer Flussmittel zurückhaltenden Beschichtung, die Flussmittelteilclien und ein Bindemittel umfasst, das mindestens 10 Gew.-% eines Kunstharzes enthält, das als Hauptbestandteil auf einem Methacrylat-Homopolymer oder einem Metacrylat-Copolymer basiert,
- wobei die Flussmittel zurückhaltende Beschichtung entweder:
eine Vorhartlötbeschichtung ist, die ein Flussmittel oder eine Flussmittel erzeugende Verbindung und eine Vorhartlötlegierung oder eine Zusammensetzung enthält, die bei Erwärmen eine Hartlötlegierung erzeugt, oder
eine Vorflussmittelbeschichtung ist, die nur ein Flussmittel oder einen Flussmittel erzeugenden Bestandteil enthält, der auf der Oberseite eines plattierten Materials bereitgestellt ist, das eine Hartlötlegierung enthält,
oder die oben erwähnte Vorflussmittelbeschichtung ist, wobei das beschichtete Aluminiumprodukt in Kombination mit einem plattierten Aluminiummaterial verwendet wird,
- Umformen des Zwischenobjekts zu dem geformten Produkt, und
- Erwärmen des geformten Produkts auf eine Temperatur, die ausreicht, um zwischen bestimmten Teilen des geformten Produkts mindestens eine hartgelötete Verbindung bereitzustellen.

2. Verfahren nach Anspruch 1, **dadurch gekennzeichnet, dass** das Gewichtsverhältnis des Flussmittels zu dem Kunstharz in der Flussmittelzusammensetzung im Bereich von 9:1 bis 3:2 liegt.

3. Verfahren nach einem der Ansprüche 1 bis 2, **dadurch gekennzeichnet, dass** die Menge von reaktivem Flussmittel derart ausgewählt ist, dass die Menge von freiem Si, Zn oder Zn + Si auf der beschichteten Oberfläche im Bereich von 1 bis 7 g/m² liegt.

4. Verfahren nach Anspruch 1, **dadurch gekennzeichnet, dass** das Flussmittel auf einer Fluoraluminatverbindung basiert.

5. Verfahren nach einem der Ansprüche 1 bis 4, **dadurch gekennzeichnet, dass** das Umformen mindestens einen Biegevorgang mindestens eines Teils der flachen Oberfläche des Zwischenprodukts beinhaltet.

6. Verfahren nach einem der Ansprüche 1 bis 5, **dadurch gekennzeichnet, dass** das Produkt ein gefaltetes Rohr ist.

7. Verfahren nach einem der Ansprüche 1 bis 5, **dadurch gekennzeichet, dass** das Produkt ein geschweißtes Rohr ist.

8. Verfahren nach einem der Ansprüche 1 bis 5, **dadurch gekennzeichnet, dass** das Produkt ein gewickeltes Rohr ist.

9. Verfahren nach Anspruch 8, **dadurch gekennzeichnet, dass** das Produkt ein Sammelrohr ist.

## Revendications

1. Procédé de fabrication d'un produit profile constitué d'aluminium ou d'un alliage d'aluminium comprenant les étapes de :
- production d'un objet intermédiaire par profilé ou laminage et ayant, au moins, une surface plate,
- revêtement, d'au moins, une surface plate avec un revêtement de retenue de flux comprenant des particules de flux et un liant dont, au moins, 10% du poids est un homopolymère méthacrylate ou copolymère méthacrylate à base de résine synthétique, en tant que constituant principal,
- ou le revêtement de retenue de flux est :
un revêtement pré-brasé contenant un flux ou un composé produisant un flux et un alliage de brasage ou une composition produisant un alliage de brasage lors du chauffage.
ou :
un revêtement de préfluxage qui contient uniquement un composé produisant un flux fourni dans la partie supérieure d'un matériau claddé contenant un alliage de brasage.
ou le revêtement de préfluxage susmentionné où le produit d'aluminium revêtu est utilisé en combinaison avec un matériau en aluminium claddé.
- reprofilage de l'objet intermédiaire en produit profilé, et
- chauffage du produit profilé jusqu'à atteindre une température suffisante pour permettre, au moins, une connexion de brasage entre les parties définies des produits profilés.

2. Procédé conformément à la revendication 1, **caractérisé en ce que** le rapport pondéral du flux de la résine synthétique se trouve dans l'écart de 9 :1 à 3 :2 dans la composition du flux.

3. Procédé conformément à l'une quelconque des revendications 1 - 2, **caractérisé en ce que** le montant de flux réactif est choisi de façon que le montant de Si, Zn ou Zn+Si libre se trouve dans l'écart de 1 à 7 g/m2 sur la surface revêtue.

4. Procédé conformément à la revendication 1, **caractérisé en ce que** le flux est basé à partir d'un composé fluoroaluminate.

5. Procédé conformément à l'une quelconque des revendications 1-4, **caractérisé en ce que** le reprofilage implique, au moins, une opération de flexion d'au moins une partie de la surface plate du produit intermédiaire.

6. Procédé conformément à l'une quelconque des revendications 1 - 5 **caractérisé en ce que** le produit est un tube plié.

7. Procédé conformément à l'une quelconque des revendications 1 - 5 **caractérisé en ce que** le produit est un tube soudé.

8. Procédé conformément à l'une quelconque des revendications 1 - 5 **caractérisé en ce que** le produit est un tube roulé.

9. Procédé conformément à la revendication 8, **caractérisé en ce que** le produit est un tube distributeur.
